Europäisches Patentamt

European Patent Office

Office européen des brevets

(19)

(11) Veröffentlichungsnummer: **0 011 176**
**B1**

(12) **EUROPÄISCHE PATENTSCHRIFT**

(45) Veröffentlichungstag der Patentschrift:
27.01.82

(21) Anmeldenummer: 79104200.5

(22) Anmeldetag: 29.10.79

(51) Int. Cl.³: **B 01 D 53/18**, B 01 D 3/16 //
F28F25/08, B01F5/00,
B01D45/08, B01J19/04

(54) Packung zum Einbau in Kolonnen, Apparate bzw. Rohre in der Verfahrenstechnik.

(30) Priorität: 09.11.78 DE 2848678

(43) Veröffentlichungstag der Anmeldung:
28.05.80 Patentblatt 80/11

(45) Bekanntmachung des Hinweises auf die Patenterteilung:
27.01.82 Patentblatt 82/4

(84) Benannte Vertragsstaaten:
DE

(56) Entgegenhaltungen:
BE-A-678 253
DE-A-2 123 421
DE-C-253 078
DE-C-380 996
DE-C-654 827
FR-A-1 015 284
FR-A-1 193 406
FR-A-2 301 281
US-A-3 083 952
US-A-4 040 824

(73) Patentinhaber: BAYER AG, Zentralbereich Patente, Marken und Lizenzen, D-5090 Leverkusen 1, Bayerwerk (DE)

(72) Erfinder: Melin, Thomas, Dr. c/o Cutter Laboratories, Inc., Fourth and Parker Streets, Berkeley, California 94710 (US)

Packung zum Einbau in Kolonnen, Apparate bzw. Rohre in der Verfahrenstechnik

Die Erfindung betrifft eine Packung zum Einbau in durchströmte Kolonnen, Apparate bzw. Rohre zum Zwecke der Rektifikation und Absorption mit einer Vielzahl gewendelter Streifen, die parallel zueinander und zur Hauptströmungsrichtung angeordnet sind und durch Verbindungselemente miteinander verbunden sind, die im Vergleich zu den gewendelten Streifen schmal ausgebildet und senkrecht zu ihnen angeordnet sind.

Zum Zwecke der Rektifikation und Absorption werden in der Verfahrenstechnik neben völlig ungeordneten Schüttungen Gestrickpakete, geschichtete oder gerollte Einbauten aus Blech, Draht- und Kunststoffgewebe verwendet, die entweder durch Abstandshalter oder durch die Struktur des verwendeten Materials (Knickung, herausgebogene Laschen) Zwischenräume aufweisen, durch die das Gas hindurchtreten kann.

Eine Packung mit einer Vielzahl, in regulärer Anordnung nebeneinanderliegender gewendelter Streifen ist in der FR-A-2 301 281 beschrieben. Versuche mit Packungen dieser Bauart haben gezeigt, daß die Trennleistung im Hinblick auf den großtechnischen Einsatz der Packung noch verbesserungsbedürftig ist. Die relativ geringe Trennleistung ist vermutlich durch ungenügende Quervermischung zumindest einer Phase, starke Empfindlichkeit gegen ungleichmäßige Anfangsverteilung der Flüssigkeit oder Streuung des lokalen Gas- oder Flüssigkeitsdurchsatzes über den Kolonnenquerschnitt bedingt. Hier setzt die Erfindung an.

Es liegt die Aufgabe zugrunde, die bekannte Packung mit einer Vielzahl gewendelter Streifen in der Weise zu verbessern, daß eine möglichst gute Querverteilung der Gas- und Flüssigphase erreicht wird. Weitere Bedingungen sind dabei ein geringer Druckabfall über die Packung, eine kurze Baulänge und eine hohe mechanische Belastbarkeit. Außerdem soll die Fertigung der Packung im Hinblick auf Zeit- und Materialaufwand möglichst problemlos sein.

Diese Aufgabe wird bei einer Packung der oben beschriebenen Bauart erfindungsgemäß dadurch gelöst, daß die Verbindungselemente als Querverteilungselemente ausgebildet sind, die aus Drahtgewebe oder Blech oder einzelnen, paar- oder gruppenweise nebeneinanderliegenden Fäden oder Drähten bestehen, und mit den gewendelten Streifen verwebt oder durch Schweißung, Lötung oder Klebung mechanisch und strömungstechnisch verbunden sind.

Eine bevorzugte Ausführung der Erfindung ist dadurch gekennzeichnet, daß die Packung aus parallel nebeneinandergeschichteten Bahnen von durch die Querverteilungselemente miteinander verbundenen innerhalb jeder Bahn gleichsinnig gewendelten Streifen besteht. Die gewendelten Streifen werden vorteilhaft so dimensioniert, daß das Verhältnis von Ganghöhe h zu Streifenbreite b kleiner als 2,5 ist.

Die gewendelten Streifen bestehen vorzugsweise aus einem Drahtgewebe oder aus gelochten, geschlitzten oder eingeschnittenen Blechstreifen. Besonders gut ist ein Drahtgewebe geeignet, das unter 20 bis 70°, vorzugsweise unter 45°, zur Gewebestruktur geschnitten ist.

Bei einem Vergleich mit Packungen nach dem Stand der Technik hat sich herausgestellt, daß die erfindungsgemäße Packung hinsichtlich der wichtigen Beurteilungskriterien Trennleistung (z. B. theoretische Bodenzahl pro Packungshöhe bei der Rektifikation von Testgemischen), Druckverlust pro Packungshöhe, Durchsatzleistung pro Fläche, Herstellungskosten und Einsetzbarkeit in industriellen Kolonnen in mindestens einem Punkt deutlich günstiger abschneidet.

Aus folgenden Gründen wird eine hohe Trennleistung pro Packungshöhe erzielt:

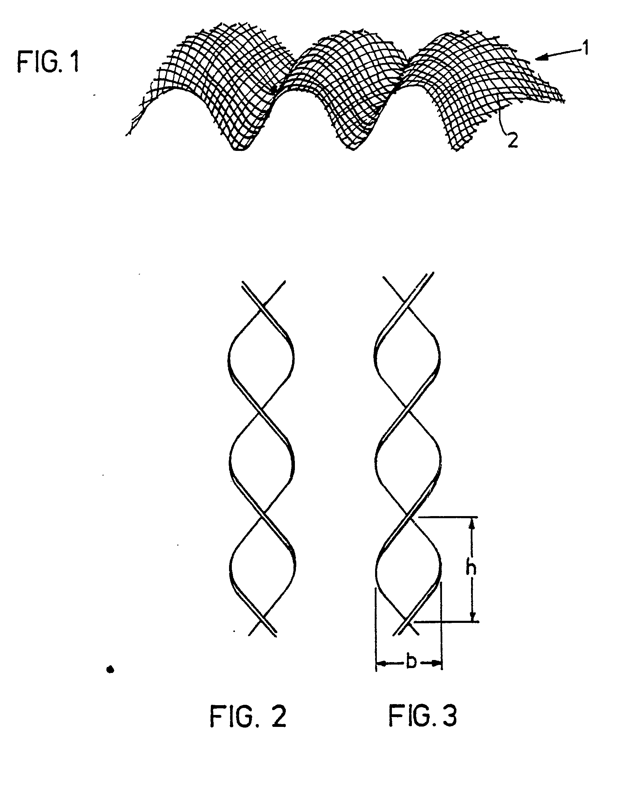

Die regelmäßige Anordnung der gewendelten Streifen (Fig. 1 bis 3) ergibt eine große Zahl gleich großer Gaskanäle, so daß kaum eine gasseitige Maldistribution auftritt. Flüssigkeitsseitige Maldistribution und Bachbildung werden durch die waagerecht verlaufenden Verbindungselemente, die bei geeigneter Ausführung eine sehr gute Querverteilung bewirken, weitgehend verhindert. Die gleichmäßige Flüssigkeitsaufgabe ist daher weniger kritisch als bei vielen anderen Packungen. Die negativen Auswirkungen evtl. dennoch auftretender ungleichmäßiger Strömungen werden durch die hervorragenden Quermischungseigenschaften in der Gasphase, die in der schachbrettartigen Ausführung mit abwechselnd links- und rechtssinnig gewendelten Elementen besonders ausgeprägt sind, stark verringert. Diese Ausführung weist außerdem durch die ineinandergreifenden Wendelflächen eine besonders häufige Erneuerung der gasseitigen Grenzschicht und daher einen hohen gasseitigen Stoff- und Wärmeübergangskoeffizienten auf. Da die Packung keine durchgehenden, senkrechten Kanäle aufweist, führt evtl. auftretende Tropfenablösung kaum zum Trennwirkungsverlust.

Die erfindungsgemäße Anordnung ermöglicht eine sehr dichte Packung der Elemente und damit eine große spezifische Oberfläche. Bei 15 mm Streifenbreite ergeben sich z. B. über 300 m²/m³ Packungsvolumen, bei 10 mm Streifenbreite über 450 m²/m³. Dies ist ebenfalls ein Grund für die hohe Trennleistung der Packung. Insbesondere bei Verwendung von unter 45° geschnittenen Gewebestreifen und waagerecht verlaufenden kapillarwirkungsaktiven Verbindungselementen, z. B. paar- oder gruppenweise nebeneinanderliegenden Drähten, ergeben sich auch mit Geweben, die nach dem Stand der Technik nicht selbstbenetzend sein sollten, hervorragende Benetzungseigenschaften.

Durch die Verbindung benachbarter gewendelter Streifen zu relativ steifen Bahnen kann der Zusammenbau der Packung ähnlich einfach erfolgen wie bei den bekannten, im Handel befindlichen Gewebepackungen. Es wird z. B. entweder durch Aufrollen der Bahn auf einen Kern eine spiralförmige Packung hergestellt oder eine geschichtete Packung durch Nebeneinandersetzen von auf die erforderliche Länge geschnittenen Bahnstücken erzeugt. Die Stabilität der so erzeugten Packung ist so hoch, daß sie begehbar ist, was für den Einbau in große Kolonnen sehr vorteilhaft ist.

Im folgenden werden Ausführungsbeispiele der Erfindung an Hand von Zeichnungen näher erläutert. Es zeigt

Fig. 1 einen gewendelten Streifen aus Gewebematerial in perspektivischer Darstellung,

Fig. 2 einen linkssinnig gewendelten Streifen (Aufriß),

Fig. 3 einen rechtssinnig gewendelten Streifen (Aufriß),

Fig. 4 eine Bahn, die durch Zusammenfügen einer Vielzahl von gewendelten Streifen gebildet ist,

Fig. 5 eine alternative Ausführung einer Bahn von gewendelten Streifen,

Fig. 6 eine Packung mit einer schachbrettartigen Anordnung der gewendelten Streifen in Draufsicht,

Fig. 7 einen Seitenriß der Packung gemäß Fig. 6,

Fig. 8 a—d waagerechte Schnitte durch die Packung an den Stellen A, B, C, D in Fig. 7,

Fig. 9 a—d verschiedene Streifenformen vor der Wendelung.

Der schraubenförmig gewendelte Streifen 1 gemäß Fig. 1 wurde durch Verdrillung eines rechteckförmigen Drahtgewebestreifens 2 um die Längsachse hergestellt. Es wurde gefunden, daß die Verdrillung leichter vonstatten geht, wenn der Drahtgewebestreifen nicht parallel zu den Drähten sondern unter einem Winkel von 20 bis 70°, z. B. 45°, geschnitten ist. Die Maschenweite kann in weiten Grenzen variiert werden und beträgt z. B. 0,2 mm. Die Drahtstärke liegt im Bereich von 0,1 bis 0,3 mm. Die mit der Verdrillung einhergehende Stauchung der achsennahen Bezirke und Dehnung der Randzonen führt in diesem Fall nur zu einer Deformation der Maschen. Im Gegensatz dazu stößt die kontinuierliche Wendelung eines durchgehenden kompakten Blechstreifens auf erhebliche fertigungstechnische Schwierigkeiten.

In Fig. 2 ist ein linkssinnig und in Fig. 3 ein rechtssinnig gewendelter Streifen 1 dargestellt. Die Streifenbreite b liegt für die Rektifikation, die Absorption und Tropfenabscheidung zwischen 8 und 30 mm. Es hat sich gezeigt, daß die Wirksamkeit der gewendelten Streifen 1 von dem Verhältnis 180°-Ganghöhe h zu Streifenbreite b abhängt. Vorzugsweise wird $h : b \leqq 2,5$ gewählt.

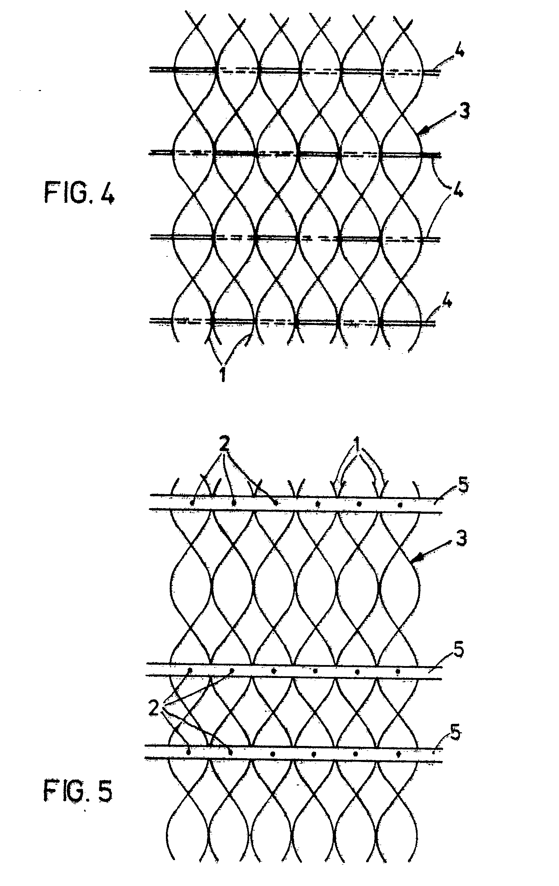

Gemäß Fig. 4 sind 8 gewendelte Streifen 1 achsenparallel nebeneinander angeordnet. Eine derart regelmäßige Anordnung wird hier definitionsgemäß als Bahn 3 bezeichnet. Die Wendeln 1 berühren sich mit ihren Außenflächen und sind durch horizontale Drähte 4 miteinander fest verbunden. Die Drähte 4 sind hier als Kettfäden durch das Gewebematerial der Wendeln 1 gefädelt. An Stelle von Drähten können auch schmale Gewebe- oder Blechstreifen als Verbindungselemente Verwendung finden. Die Streifen- bzw. Drahtstärke beträgt 0,1 bis 2 mm. Es ist nicht unbedingt erforderlich, daß pro 180°-Wendelung ein Verbindungselement eingesetzt wird. So kann z. B. auch nur bei jeder zweiten oder dritten oder vierten Wendelung ein Verbindungselement eingebaut sein.

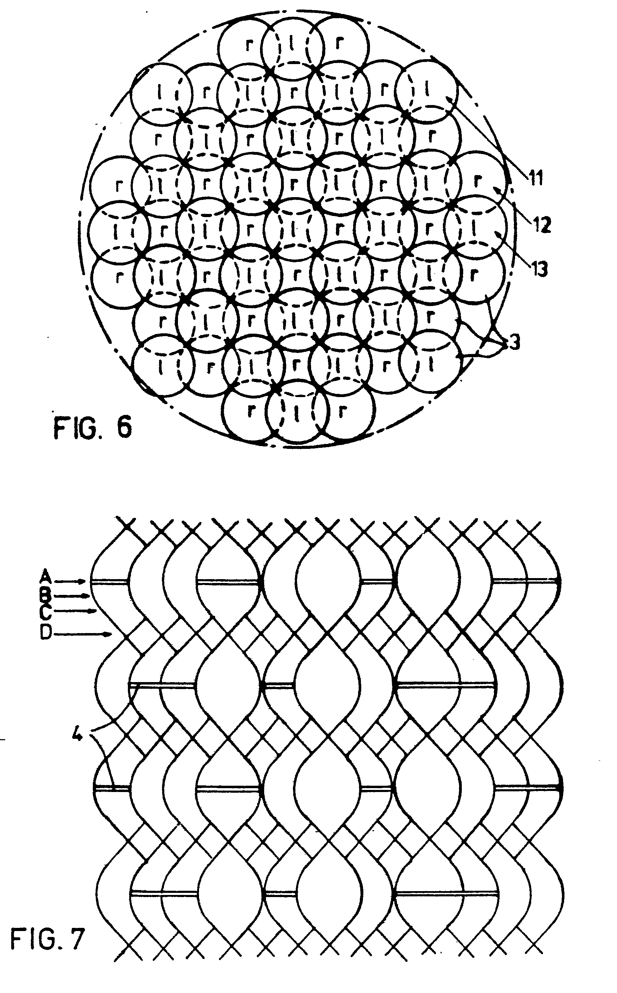

Fig. 5 zeigt einen Ausschnitt aus einer Bahn 3, bei der die Verbindungselemente aus Blechstreifen 5 bestehen, die in den Punkten P mit den Wendeln 1 durch Punktschweißung verbunden sind.

Fig. 6 zeigt eine Packung in Draufsicht, die durch eine regelmäßige parallele Anordnung von Bahnen 3 gebildet wird. Die gewendelten Streifen 1 sind hier schachbrettartig angeordnet. Benachbarte Bahnen sind ungleichsinnig gewendelt und so aneinandergeschichtet, daß die Wendelflächen ineinandergreifen, d. h. daß für ungleichsinnig gewendelte benachbarte Streifen die Kreise, welche die Grundrißprojektion der schraubenlinienförmig verlaufenden Streifenränder darstellen, einander überlappen. Die erste Bahn besteht hier nur aus linkssinnigen Wendeln 11, die zweite aus den 4 rechtssinnigen Wendeln 12 und die dritte Bahn aus den 5 linkssinnigen Wendeln 13. In der Rohrmitte erreicht die Wendelzahl pro Bahn ihr Maximum (7) und nimmt dann zur gegenüberliegenden Seite hin wieder ab. Auf diese Weise erhält die Packung näherungsweise einen kreisförmigen Querschnitt. Man erkennt, daß bei dieser Anordnung zumindest in der Nähe der Rohrachse jeder gewendelte Streifen 1 symmetrisch von 4 gegensinnig gewendelten Streifen als nächsten Nachbarn umgeben wird und daneben in etwas größerer Entfernung noch von 4 gleichsinnig gewendelten Streifen berührt wird. Auf Grund dieser Geometrie und bei der Verwendung von Drahtgewebe als Ausgangsmaterial für die Wendelstreifen kann auch am Rand der Packung noch eine relativ lückenlose Ausfüllung des kreisförmigen Kolonnenquerschnitts erzielt werden.

In Fig. 7 ist eine Aufrißprojektion der Packung gemäß Fig. 6 dargestellt, die man erhält, wenn man in Fig. 6 eine Blickrichtung von 45° wählt. Man erkennt die Schichtung und die gegenseitige Durchdringung der Wendeln.

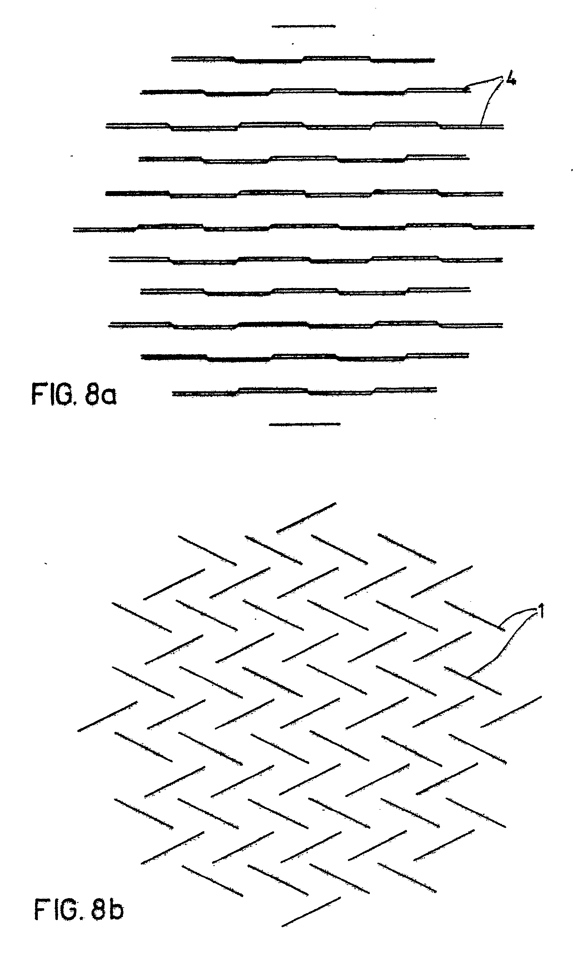

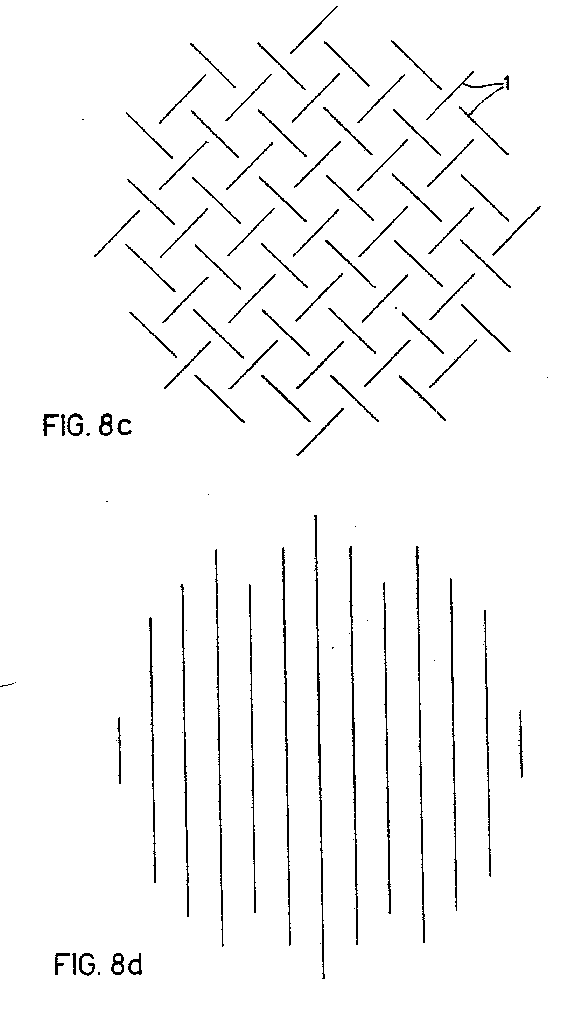

In den Fig. 8a—8d sind horizontale Schnitte an den Stellen A, B, C, D durch die Packung gemäß Fig. 7 gezeigt. Der Schnitt A erfolgt genau in Höhe der Verbindungsdrähte 4, die die Wendeln einer Bahn 3 miteinander mechanisch verbinden. Die in Fig. 8a ersichtlichen leichten Versetzungen längs eines Verbindungsdrahtes 4 kommen durch die Verwebung zustande. Die Fig. 8a und 8b entsprechen Schnitten durch die Packung an Stellen, die etwas unterhalb der Ebene des Verbindungsdrahtes 4 liegen. Fig. 8d entspricht einem Horizontalschnitt durch eine Ebene, die um eine halbe Ganghöhe h gegenüber dem Schnitt A versetzt ist. Faßt man die Wendeln 1 als Leitflächen für die herabrieselnde Flüssigkeit auf, so wird aus den Schnittfiguren deutlich, daß die Richtung der Flüssigkeitsströmung von oben nach unten ständig wechselt. An den Berührungspunkten der Wendeln und an den Verbindungsdrähten 4 erfolgt eine intensive Querverteilung der Flüssigkeit. Die Flüssigkeit verzweigt sich schon nach relativ kurzer Verweilzeit gleichmäßig innerhalb der gesamten Packung. Die ausgeprägte Querverteilung ist eine wesentliche Voraussetzung für einen intensiven Stoffaustausch in der Packung und damit für eine hohe Trennleistung der Kolonne.

Ein hoher Grad der Quervermischung geht normalerweise zu Lasten des Druckverlustes. Systematische Untersuchungen einer derartigen Packung haben jedoch gezeigt, daß der Druckverlust keinesfalls größer ist als bei den derzeit besten handelsüblichen Packungen. Mit der Packung gemäß Fig. 6 bis 8 wurden Rektifikationsversuche in einer Testkolonne von 100 mm Innendurchmesser durchgeführt. Die Wendeln 1 wurden durch Verdrillung von unter 45° zur Gewebestruktur geschnittenem Drahtgewebe hergestellt. Gemessen wurden die Kondensatorrücklaufmenge, Kopf- und Differenzdruck, die Flüssigkeitsdichte im Rücklauf und im Sumpf sowie die Rücklauf-, Kopf- und Sumpftemperatur. Die Testsubstanz war Chlorbenzol-Äthylbenzol. Der Kopfdruck betrug 60 mbar. Die Versuche wurden bei unendlichem Rücklaufverhältnis durchgeführt. Die Dampfbelastung wurde aus der Rücklaufmenge unter Berücksichtigung von Flüssigkeitsdichte, Rücklaufunterkühlung, mittlerem Kolonnendruck und -temperatur, aber ohne Zuschlag für Wärmeverluste, berechnet. Die theoretische Bodenzahl wurde aus den Flüssigkeitsdichten bei Annahme eines mittleren Trennfaktors von 1,208 bestimmt. Für den Umlaufverdampfer wurde ein theoretischer Boden angenommen und von der ermittelten theoretischen Bodenzahl abgezogen.

Im Vergleich zu der eingangs erwähnten Packung ergab sich eine erhöhte Trennleistung. Die beobachteten Unterschiede in der Trennleistung sind zurückzuführen auf die flüssigkeitsquerverteilenden Verbindungselemente, die schachbrettartige Anordnung der gewendelten Streifen mit ineinandergreifenden Wendelflächen und die enge Wendelung bei der erfindungsgemäßen Packung. Außerdem bietet sie den wesentlichen Vorteil des einfacheren Zusammenbaus und der höheren Stabilität, was insbesondere bei großen Kolonnen zum Tragen kommt. Die Aufgabe, z. B. in einer Kolonne von 1 m Durchmesser nebeneinander 14 000 8 mm breite, mit geringer Eigenstabilität ausgestattete gewendelte Streifen ohne größere Leerräume parallel anzuordnen, wäre auf anderem Wege kaum zu lösen.

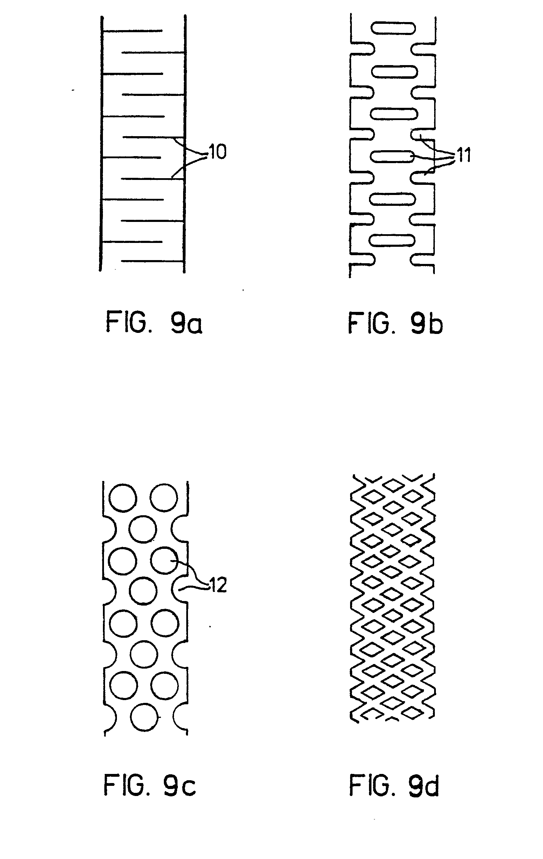

Die Herstellung der in großer Stückzahl erforderlichen gewendelten Streifen erfolgt durch Verdrillung von rechteckförmigen Blechoder Gewebestreifen. Auf die Verwendung von Drahtgewebe als Ausgangsmaterial wurde oben schon hingewiesen. Weiterhin haben sich Blechstreifen bewährt, die Durchbrüche in Form von Löchern oder Schlitzen aufweisen. Fig. 9a–9d zeigen verschiedene Typen von Streifenmaterial, das sich besonders gut wendeln läßt. Der Streifen gemäß Fig. 9a ist an den Rändern mit Einschnitten versehen, wobei sich jeweils ein Einschnitt in ein Feld erstreckt, das zwischen 2 Einschnitten auf der gegenüberliegenden Seite liegt. Die Streifen gemäß Fig. 9b und Fig. 9c sind an den Rändern und in der Mitte mit versetzten Langlöchern 11 bzw. Rundlöchern 12 versehen. Der Streifen gemäß Fig. 9d hat die Form eines handelsüblichen Streckgitters. Die Blechstärke liegt bei den Streifen gemäß Fig. 9 zwischen 0,1 und 2 mm.

Daneben sind auch Materialien für die Herstellung von gewendelten Streifen geeignet, die bei dem Verdrillungsprozeß gegebenenfalls erhitzt werden, um die nötige Verformbarkeit zu erreichen. In Betracht kommen z. B. Thermoplaste, Glas oder Keramik.

**Patentansprüche**

1. Packung zum Einbau in durchströmte Kolonnen, Apparate bzw. Rohre zum Zwecke der Rektifikation und Absorption, mit einer Vielzahl gewendelter Streifen, die parallel zueinander und zur Hauptströmungsrichtung angeordnet sind und durch Verbindungselemente miteinander verbunden sind, die im Vergleich zu den gewendelten Streifen schmal ausgebildet und senkrecht zu ihnen angeordnet sind, dadurch gekennzeichnet, daß die Verbindungselemente als Querverteilungselemente (4, 5) ausgebildet sind, die aus Drahtgewebe oder Blech oder einzelnen, paar- oder gruppenweise nebeneinanderliegenden Fäden oder Drähten bestehen, und mit den gewendelten Streifen (1) verwebt oder durch Schweißung, Lötung oder Klebung mechanisch verbunden sind.

2. Packung nach Anspruch 1, dadurch gekennzeichnet, daß die Packung aus parallel nebeneinander geschichteten Bahnen (3) von durch die Querverteilungselemente (4, 5) miteinander verbundenen, innerhalb jeder Bahn (3) gleichsinnig gewendelten Streifen (1) besteht.

3. Packung nach Ansprüchen 1 bis 2, dadurch gekennzeichnet, daß das Verhältnis von Ganghöhe h zu Streifenbreite b kleiner als 2,5 ist.

4. Packung nach Ansprüchen 1 bis 3, dadurch gekennzeichnet, daß die gewendelten Streifen (1) aus einem Drahtgewebe (2) oder gelochten (12), geschlitzten (11) oder eingeschnittenen (10) Blechstreifen bestehen.

5. Packung nach Ansprüchen 1 bis 4, dadurch gekennzeichnet, daß das Drahtgewebe (2) unter 20 bis 70°, vorzugsweise 45°, zur Gewebestruktur geschnitten ist.

## Claims

1. Packing for incorporation into columns, equipment or tubes through which material flows, for the purpose of rectification and absorption, which has a large number of coiled strips which are arranged parallel to one another and to the main direction of flow and are connected to one another by connecting elements which, compared with the coiled strips, are narrow and are arranged perpendicular to these strips, characterised in that the connecting elements are in the form of crosswise-dividing elements (4, 5) which consist of wire gauze or sheet metal or threads or wires lying side by side individually, in pairs or in groups and which are woven or connected mechanically, by welding, soldering or by adhesion, with the coiled strips (1).

2. Packing according to Claim 1, characterised in that the packing consists of parallel layers of webs (3) of strips (1) which are connected to one another by the crosswise-dividing elements (4, 5) and are coiled in the same direction within each web (3).

3. Packing according to Claims 1 to 2, characterised in that the ratio of pitch h to width of strip b is less than 2.5.

4. Packing according to Claims 1 to 3, characterised in that the coiled strips (1) consist of a wire gauze (2) or perforated (12), slit (11) or cut (10) sheet metal strips.

5. Packing according to Claims 1 to 4, characterised in that the wire gauze (2) is cut at an angle of 20 to 70°, preferably 45°, relative to the woven structure.

## Revendications

1. Empilement à incorporer dans des colonnes, appareils ou tubes traversés par un courant, en vue de la rectification et de l'absorption, avec une multiplicité de bandes spiralées qui sont agencées mutuellement en parallèle et par rapport à la direction de l'écoulement principal et qui sont reliées entre elles par des éléments de liaison qui, comparativement aux bandes spiralées, ont une constitution étroite et sont agencés perpendiculairement à celles-ci, caractérisé en ce que les éléments de liaison sont constitués comme des éléments de distribution transversale (4, 5) qui consistent en du tissu de fil métallique ou de la tôle, ou en des filaments ou fils métalliques juxtaposés individuels, par paires ou par groupes, et qui sont tissés aux bandes spiralées (1) ou mécaniquement reliés par soudage, brasage, ou collage.

2. Empilement selon la revendication 1, caractérisé en ce que l'empilement consiste en des jeux stratifiés juxtaposés parallèles (3) de bandes (1) raccordées entre elles par les éléments de distribution transversale (4, 5) et spiralées dans le même sens à l'intérieur de chaque jeu (3).

3. Empilement selon les revendications 1 et 2, caractérisé en ce que le rapport de la hauteur de pas h à la largeur de bande b est plus petit que 2,5.

4. Empilement selon les revendications 1 à 3, caractérisé en ce que les bandes spiralées (1) sont en un tissu de fils métalliques (2) ou en bandes de tôle à trous (12), à fentes (11) ou à découpes (10).

5. Empilement selon les revendications 1 à 4 caractérisé en ce que le tissu de fil métallique (2) est découpé sous un angle de 20−70°, de préférence de 45° par rapport à la structure du tissu.

FIG. 1

FIG. 2          FIG. 3

FIG. 4

FIG. 5

FIG. 6

FIG. 7

FIG. 8a

FIG. 8b

FIG. 8c

FIG. 8d

FIG. 9a

FIG. 9b

FIG. 9c

FIG. 9d